Europäisches Patentamt

European Patent Office

Office européen des brevets

(19)

(11) Publication number : **0 473 410 A2**

(12) **EUROPEAN PATENT APPLICATION**

(21) Application number : **91307874.7**

(22) Date of filing : **28.08.91**

(51) Int. Cl.⁵ : **G06F 9/32**

(30) Priority : **28.08.90 JP 227282/90**

(43) Date of publication of application :
**04.03.92 Bulletin 92/10**

(84) Designated Contracting States :
**DE FR GB**

(71) Applicant : **NEC CORPORATION**
**7-1, Shiba 5-chome Minato-ku**
**Tokyo 108-01 (JP)**

(72) Inventor : **Suyama, Hiroo**
**c/o NEC Corporation, 7-1, Shiba 5-chome**
**Minato-ku, Tokyo (JP)**

(74) Representative : **Garratt, Peter Douglas et al**
**Mathys & Squire 10 Fleet Street**
**London EC4Y 1AY (GB)**

(54) **Central processing unit.**

(57)   A central processing unit coupled with a program memory storing a plurality of instruction codes, comprises a program counter for updating and holding an address for the program memory, and an instruction decoder receiving and decoding an instruction code read out of the program memory for generating control signals. An externally-rewritable location address register holds a predetermined address, and a comparator compares the predetermined address with the address held in the program counter. When the predetermined address is not consistent with the address held in the program counter, the comparator supplies the address held in the program counter to the program memory so that an instruction code designated by the address held in the program counter is supplied to the instruction decoder. An instruction code register holds a predetermined instruction code and controlled by the comparator so as to supply the predetermined instruction code to the instruction decoder when the predetermined address is consistent with the address held in the program counter.

EP 0 473 410 A2

Jouve, 18, rue Saint-Denis, 75001 PARIS

The present invention relates to a computer, and more specifically to a central processing unit (CPU) for in an important example, a debugging support computer.

In a conventional CPU associated to a debugging support computer, a program counter holds an address of an instruction to be or being executed in the CPU, and the address held in the program counter is incremented at each time the CPU executes each one instruction. On the other hand, when the CPU executes a given instruction, the address held held in the program counter is supplied through an address bus to a memory, and an instruction code stored in a location designated by the supplied address is read out and supplied through a data bus to an instruction decoder. The instruction code thus read out is decoded by the instruction decoder, and control signals are supplied from the instruction decoder to an ALU (arithmetic and logic unit). As a result, the ALU realizes an instruction indicated by the instruction code.

For example, when it is intended to realize a software break, an instruction code for the software break is previously written at a predetermined address in the memory. With this programming, when the CPU has executed the instruction code stored at the predetermined address of the memory, the software break occurs.

As seen from the above description, it has been required to previously write the software break instruction at a predetermined address in the memory. In the conventional CPU, therefore, an area in which the software break instruction is written has been limited to a RAM (random access memory) region in which an instruction code can be arbitrarily written.

In the architecture of the above mentioned conventional CPU, when a software break generation point is set in a software debugger, an area in which a break point is set must be provided within a writable memory region. However, a built-in software debugger has been generally such that a program is stored in a ROM (read only memory). Therefore, the architecture of the above mentioned conventional CPU has been disadvantageous in that the program cannot be broken by the software debugger.

Accordingly, it is an object of the present invention to provide a CPU which has overcome the above mentioned defect of the conventional one.

Another object of the present invention is to provide a CPU capable of breaking at an arbitrary desired point in a software manner without using a RAM.

The above and other objects of the present invention are achieved in accordance with the present invention by a central processing unit coupled with a program memory storing a plurality of instruction codes, the central processing unit comprising a program counter for updating and holding an address for the program memory, an instruction decoder receiving and decoding an instruction code read out of the program memory for generating control signals, operating means controlled by the control signals for executing an instruction expressed by an instruction code, an externally-rewritable location address register for holding a predetermined address, a comparator for comparing the predetermined address with the address head in the program counter and for supplying the address held in the program counter to the program memory when the predetermined address is not consistent with the address held in the program counter so that an instruction code designated by the address held in the program counter is supplied to the instruction decoder, and an instruction code register holding a predetermined instruction code for supplying the predetermined instruction code to the instruction decoder when the predetermined address is consistent with the address held in the pro gram counter.

With the above mentioned arrangement, until the address of the program counter reaches the predetermined instruction code held in the instruction code register, the comparator ensures that instruction codes are sequentially supplied from the program memory to the instruction decoder. However, if the address of the program counter becomes the predetermined instruction code held in the instruction code register, the instruction code is supplied to the instruction decoder from the instruction code register, not from the program memory. Since the predetermined address held in the location address register can be rewritten, it is possible to arbitrarily modify the program in the program memory.

The above and other objects, features and advantages of the present invention will be apparent from the following description of preferred embodiments of the invention with reference to the accompanying drawings, in which: -

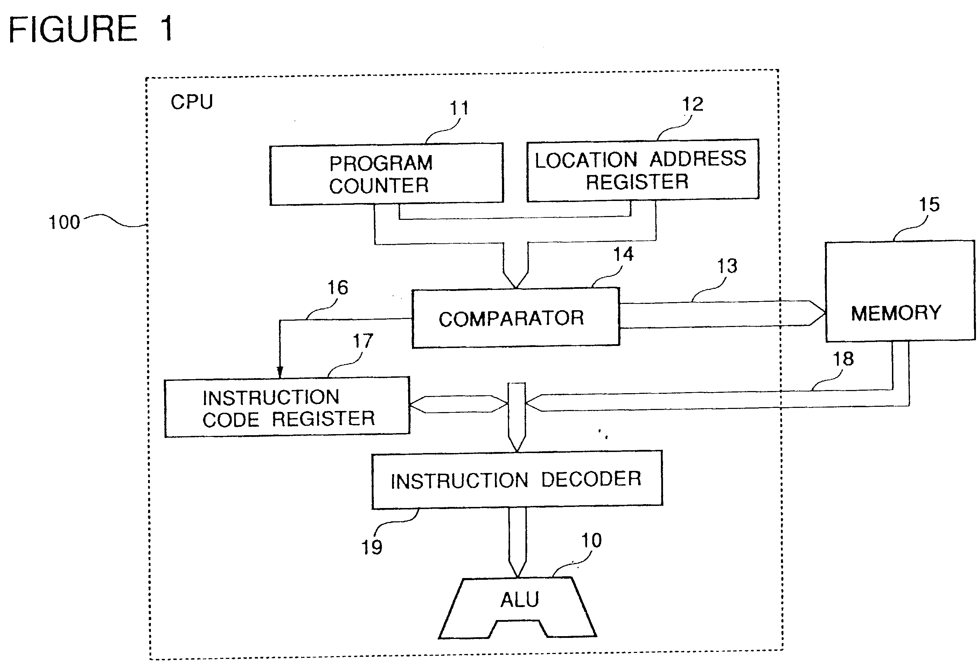

Figure 1 is a block diagram of a central processing unit in accordance with the present invention.

Referring to Figure 1, a CPU (central processing unit) in accordance with the present invention is generally shown by Reference Numeral 100, and comprises a program counter 11 and a location address register 12 both coupled to a comparator 14. The comparator 14 is coupled through an address bus 13 to a program memory 15 external to the CPU 100. In addition, the comparator 14 outputs an address coincidence signal 16 to an instruction code register 17. The program memory 15 and the instruction code register 17 are coupled through a data bus 18 to an instruction decoder 19, which outputs control signals to an ALU 10.

When a software break should be performed, the above mentioned CPU 10 operate as follows:

First, an address for triggering a software break (called a "break address" hereinafter) is previously stored or registered in the location address register 12, and an instruction code for the software break is also previously set or registered in the instruction code register 17.

In operation, the address of the program counter 11 is incremented at each time the CPU 100 executes each one instruction. At each time the address of the program counter 11 is incremented, the address of the program counter 11 is compared with the break address registered in the location address register 12 by the comparator 14. If the address of the program counter 11 is different from the break address registered in the location address register 12, the address of the program counter 11 is supplied through the comparator 14 and the address bus 13 to the program memory 15. As a result, an instruction code is read out from a location of the program memory 15 designated by the address of the program counter 11, and then, supplied through the data bus 18 to the instruction decoder 19, so that an instruction designated by the read-out instruction code is executed by the ALU 10.

Therefore, if the address of the program counter 11 is different from the break address registered in the location address register 12, the CPU operates similarly to the conventional one.

However, if the address of the program counter 11 is consistent with the break address registered in the location address register 12, the comparator 14 does not supply an address to the address bus 13, but outputs the address coincidence signal 16 to the instruction code register 17. Therefore, the program memory 15 dose not output an instruction code onto the data bus 18. But, in response to the address coincidence signal 16, the instruction code register 17 outputs the software break instruction code previously set in the instruction code register 17, to the instruction decoder 19. Therefore, the instruction decoder 19 decodes the software break instruction code and supplies control signals to the ALU 10 so as to cause the ALU 10 to realize the software break.

In the disclosed embodiment, as been from the above, it is not necessary to write the software break instruction code into the program memory 15. Therefore, since the program memory 15 is not required to be writable, the program memory can be formed of a ROM which is not rewritable.

As will be understood from the above description of the embodiment with reference to the drawing, the present invention is characterized in that, based on the address held in the location address register, an instruction code is fetched from the instruction code register internally provided in the CPU, not from the program memory provided extenally to the CPU. Therefore, it is possible to batch at any arbitrary point in a program stored in the program memory. For example, if an instruction code for the software break is written into the instruction code register internally provided in the CPU, it is possible to give any modification to any program stored in the program memory.

The invention has thus been shown and described with reference to the specific embodiments. However, it should be noted that the present invention is in no way limited to the details of the illustrated structures but changes and modifications may be made within the scope of the appended claims.

## Claims

1. A central processing unit coupled with a program memory storing a plurality of instruction codes, the central processing unit comprising a program counter for updating and holding an address for the program memory, an instruction decoder receiving and decoding an instruction code read out of the program memory for generating control signals, operating means controlled by the control signals for executing an instruction expressed by an instruction code, an externally-rewritable location address register for holding a predetermined address, a comparator for comparing the predetermined address with the address held in the program counter and for supplying the address held in the program counter to the program memory when the predetermined address is not consistent with the address held in the program counter so that an instruction code designated by the address held in the program counter is supplied to the instruction decoder, and an instruction code register holding a predetermined instruction code for supplying the predetermined instruction code to the instruction decoder when the predetermined address is consistent with the address held in the program counter.

2. A central processing unit claimed in Claim 1 wherein the program memory is formed of a read only memory.

3. A central processing unit claimed in Claim 1 wherein the instruction code register holds a software break instruction code.

4. A central processing unit claimed in Claim 1 wherein the operating means is formed of an arithmetic and logic unit.

5. A debugging support computer containing a CPU in accordance with any one of the preceding claims.

# FIGURE 1